(19) Europäisches Patentamt
European Patent Office
Office européen des brevets

(11) **EP 0 604 904 B1**

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(51) Int. Cl.$^6$: **C02F 1/76**, C02F 1/78, C02F 1/72, C02F 1/28

(21) Anmeldenummer: **93120776.5**

(22) Anmeldetag: **23.12.1993**

(54) **Verfahren zur Abwasserbehandlung durch chemische Oxidation**

Process for the treatment of waste water by chemical oxydation

Procédé de traitement des eaux usées par l'oxydation chimique

(84) Benannte Vertragsstaaten:
**AT BE CH DE DK ES FR GB GR IE IT LI LU NL PT SE**

(30) Priorität: **30.12.1992 DE 4244482**

(43) Veröffentlichungstag der Anmeldung:
**06.07.1994 Patentblatt 1994/27**

(73) Patentinhaber: **Solvay Deutschland GmbH D-30173 Hannover (DE)**

(72) Erfinder:
• **Dilla, Wolfgang**
  **D-47495 Rheinberg (DE)**
• **Dillenburg, Helmut**
  **D-47495 Rheinberg (DE)**
• **Klumpe, Michael**
  **D-47495 Rheinberg (DE)**
• **Krebber, Hans-Georg**
  **D-47493 Rheinberg (DE)**
• **Linke, Horst**
  **D-47495 Rheinberg (DE)**
• **Orzol, Detlef**
  **D-45964 Gladbeck (DE)**
• **Plönissen, Erich**
  **D-47495 Rheinberg (DE)**

(74) Vertreter: **Lauer, Dieter, Dr.
Solvay Pharmaceuticals GmbH,
Hans-Böckler-Allee 20
30173 Hannover (DE)**

(56) Entgegenhaltungen:
DE-A- 2 758 220          US-A- 3 767 572
US-A- 3 804 755          US-A- 4 366 064

## Beschreibung

Die vorliegende Erfindung betrifft ein Verfahren zur Verminderung des Gehaltes an organisch-chemischen Stoffen in Abwässern aus der Halogenhydrin-, Polyol- und/oder Vinylchloridherstellung durch chemische Oxidation, vorzugsweise in Gegenwart von Chlor, und gegebenenfalls zusätzliche alkalische thermische Behandlung des Abwassers sowie die Verwendung des Verfahrens zur Behandlung von Abwässern.

Es ist bereits bekannt, Abwässer mit unerwünschten, gelösten oder dispergierten organischen Inhaltsstoffen einer oxidativen chemisch-thermischen Behandlung zu unterwerfen, wobei die organischen Substanzen zu Kohlendioxid und Wasser oxidiert werden. Ein solches Verfahren ist beispielsweise in der DE-OS 26 40 603 beschrieben und ist allgemein unter der Bezeichnung Naßoxidation bekannt.

Das Naßoxidationsverfahren ist durch eine Verbrennung in flüssiger Phase gekennzeichnet. Um einen befriedigenden Abbau der organischen Verbindungen und ausreichende Umsetzungsgeschwindigkeiten zu erreichen, sind eine bestimmte Sauerstoffkonzentration sowie hohe Temperaturen und Drücke erforderlich. Diese Behandlungsmethode ist damit wegen ihres hohen Energieverbrauchs und der aufwendigen Apparaturen sehr kostenintensiv. Die angewandten Temperaturen und Drücke können zwar durch den Einsatz von Schwermetallkatalysatoren vermindert werden, jedoch führt dies zu einer nachfolgenden Belastung des Abwassers mit den katalytisch wirkenden Substanzen, was gegebenenfalls weitere Behandlungsschritte erforderlich macht.

Die Belastung von Gewässern mit organischen Substanzen wird durch eine Reihe physikalisch-chemischer Parameter charakterisiert. Hierzu gehört der "Chemische Sauerstoffbedarf" (CSB) als Maß für den Sauerstoffverbrauch bei einer chemischen Naßoxidation der in einem Wasser gelösten oder dispergierten organischen Verbindungen unter definierten Bedingungen. Über diesen Parameter kann somit der Anteil an chemisch oxidierbaren Stoffen in einem Abwasser berechnet werden.

Aus der japanischen Patentanmeldung 49/021 951 (referiert in Chemical Abstracts CA81(10): 54117j) ist bekannt, organische Substanzen enthaltendes Wasser zur Herabsetzung des CSB-Wertes einer Behandlung mit UV-Licht sowie mit aktivem Chlor oder Hypochlorit zu unterwerfen, gefolgt von einer Nachbehandlung mit Aktivkohle. Die Anwendung von UV-Licht in der Wasserbehandlung ist jedoch technisch aufwendig und teuer.

Aus der DE-OS 36 20 980 ist ein Verfahren zur Verminderung von CSB- und AOX-erzeugenden Schadstoffen in Bleicherei-Abwässern aus der Zellstoffproduktion bekannt. Der AOX ist ein weiterer Summenparameter zur Charakterisierung oragnischer Belastungen in Gewässern. Er steht für "adsorbierbare organische Halogenverbindungen" und wird als der Teil organischer Halogenverbindungen (X = Cl, Br, I) bestimmt, der sich an Aktivkohle adsorbieren läßt, wobei die gesamte adsorbierte Menge auf X = Cl umgerechnet wird.

Das Verfahren gemäß DE-OS 36 20 980 wird bevorzugt dreistufig durchgeführt, wobei in der ersten Stufe die stark saure Lösung aus der Chlorbleiche zur Ausfällung von Chlorverbindungen und damit zur Senkung des CSB und des AOX mit Calciumionen versetzt wird. In einer zweiten Stufe folgt eine weitere AOX-Reduzierung durch eine thermische alkalische Hydrolyse, die zu einer Teil-Dechlorierung der nicht ausgefällten adsorbierbaren organischen Chlorverbindungen führt. Die nach diesem Verfahrensschritt in dem Abwasser noch enthaltenden CSB- und AOX-erzeugenden Schadstoffe werden in einer dritten Stufe einem mikrobiellen Abbau unterworfen.

Auch dieses Verfahren zur Verminderung von organischen Schadstoffen in Abwässern ist sehr aufwendig und damit vom wirtschaftlichen Standpunkt her unbefriedigend.

Gemäß DE-OS 27 58 220 werden Cyanuratverbindungen aus Abwässern durch Umsetzung mit Natriumhypochlorit entfernt Die Umsetzung erfolgt bei 20 bis 85 °C und einem pH-Wert zwischen 8,0 bis 12,0.

Aufgabe der vorliegenden Erfindung war es, ein Verfahren bereitzustellen, mit dem organische Verbindungen, die insbesondere in großindustriellen Prozessen bzw. Syntheseverfahren anfallen und häufig erhebliche CSB- und, im Fall von halogenorganischen Verbindungen, auch AOX-Belastungen von Gewässern bewirken, mit geringem technischen und finanziellen Aufwand abgebaut werden können.

Das Verfahren sollte daher die erfolgreiche Behandlung von Abwässern erlauben, die als organische Stoffe nichthalogenierte und gegebenenfalls auch halogenierte organische Verbindungen enthalten können, so daß die Möglichkeit eröffnet wird, neben einer vornehmlichen CSB-Verminderung gegebenenfalls auch eine Reduzierung des AOX-Gehaltes des zu behandelnden Abwassers zu erreichen.

Erfindungsgemäß sollten dabei Abwässer der Halogenhydrin-, der Polyol- und/oder der Vinylchloridherstellung, unabhängig von ihrem jeweiligen CSB- und gegebenenfalls auch AOX-Gehalt, aufbereitet werden können, und das Behandlungsverfahren sollte zu einer wirksamen, deutlichen Absenkung der CSB- und gegebenenfalls auch AOX-Werte führen.

Zur Lösung dieser Aufgabe wird vorgeschlagen, daß das Abwasser, das einen CSB-Gehalt (Chemischer Sauerstoffbedarf) und eine Alkalität aufweist oder alkalisch eingestellt wird, in mindestens einen Reaktor eingeleitet und bei einer Temperatur von mehr als 80 °C mit einer Chlor enthaltenden und/oder Chlor freisetzenden chemischen Substanz behandelt wird, wobei der Chloreintrag in einer Menge von mehr als 1 g Chlor pro g CSB (bezogen auf den Chlorgehalt der Chlor enthaltenden und/oder Chlor freisetzenden chemischen Substanz) erfolgt und ein Molverhältnis von OH~ zu Chlor von mehr als 1,5 und während der Reaktion ein pH-Wert des Abwassers von ≥ 5, vorzugsweise ≥ 6, eingehalten oder eingestellt werden, daß das chlorbehandelte Abwasser einer Reaktionszeit von mehr als 0,25 Stunden, vorzugsweise mehr als 0,4 Stunden unterzogen wird, wobei die organischen Verbindungen zumindest teilweise oxidiert werden, und daß nachfolgend das Abwasser weiterbehandelt und/oder aus dem Reaktor ausgetragen oder abgelassen wird.

Mit diesem Verfahren kann auf wirtschaftliche und technisch einfache Weise der CSB-Gehalt von Abwässern um mehr als 90 % gesenkt werden. Enthält das Abwasser zusätzlich AOX-erzeugende organische Stoffe, so wird der AOX-Gehalt des Abwassers ebenfalls durch das erfindungsgemäße Verfahren vermindert.

Es wurde festgestellt, daß mit dem erfindungsgemäßen Verfahren der CSB- und gegebenenfalls auch AOX-Gehalt (sofern halogenorganische Verbindungen in dem Abwasser vorhanden sind) industrieller Abwässer wirksam vermindert werden kann.

Mit dem erfindungsgemäßen Verfahren können insbesondere auch solche Abwässer behandelt werden, die bereits einer Vorreinigung unterzogen wurden, beispielsweise durch andere oxidative sowie übrige chemisch-physikalische, chemische, physikalische und/oder biologische Verfahren. Vorzugsweise werden Abwässer mit dem erfindungsgemäßen Verfahren behandelt, die einer Vorbehandlung durch ein thermisches alkalisches, ein adsorptives und/oder ein mikrobiologisches Verfahren unterworfen worden sind. Das Abwasser kann aber auch durch eine Fällungsbehandlung vorgereinigt worden sein.

Der Eintrag von Chlor (in Form einer chlorhaltigen und/oder Chlor freisetzenden chemischen Substanz) gemäß dem erfindungsgemäßen Verfahren in eine alkalische wäßrige Lösung, wie sie in den Prozeßströmen einer Allylchlorid/Epichlorhydrin/Glycerin-Anlage anfällt, bewirkt eine Disproportionierung des Chlors in Chlorit und Hypochlorit gemäß Gleichung 1:

$$Cl_2 + OH^\sim \rightarrow Cl^\sim + HOCl \quad \text{(Gleichung 1)}$$

Die Oxidationswirkung des Hypochlorits wird ausgenutzt, um die organischen Inhaltsstoffe (im Fall der vorgenannten Ablauge aus einer Allylchlorid/Epichlorhydrin/Glycerin-Anlage: vorzugsweise Glycerin, Glycerinsäure, Milchsäure, Glycidol) eines alkalisch wirkenden Abwassers zu $CO_2$ und Wasser zu oxidieren. Das entstehende $CO_2$ sowie mögliche, gasförmig anfallende Zwischenprodukte der Oxidation können bei druckloser Verfahrensführung abgetrieben werden.

Erfindungsgemäß wurde festgestellt, daß für den CSB-Abbau (und gegebenenfalls auch AOX-Abbau) nach dem gefundenen Verfahren bestimmte Parameter mit streng definierten Grenzwerten unbedingt eingehalten werden müssen. Zum einen ist eine genaue Chlordosierung in Abhängigkeit von der organischen Fracht (CSB-erzeugende Inhaltsstoffe des Abwassers) notwendig, um möglichst minimale Konzentrationen an Hypochlorit und Chlorat (letzteres bildet sich als unerwünschtes Nebenprodukt in Gegenwart von überschüssigem Chlor) im Abwasser zu gewährleisten. Aus dem gleichen Grund muß auch ein ganz bestimmtes Chlor/Alkalitäts-Verhältnis eingehalten oder eingestellt werden. Besonders bevorzugt ist dabei ein Molverhältnis von $OH^\sim$ zu Chlor von 1,6 bis 3,5, vorzugsweise 1,6 bis 2,5, besonders bevorzugt 2 bis 3, insbesondere 2 bis 2,2, wobei das Hydroxid-Ion als freies, hydratisiertes Ion (d. h. in gelöster Form) oder chemisch gebunden in dem Abwasser vorliegen kann. Im letzteren Fall muß eine kontinuierliche Nachlösung der gebundenen Hydroxid-Ionen entsprechend dem einzuhaltenden Chlor/Alkalitäts-Verhältnis gewährleistet sein. Als Hydroxid-Ionen freisetzende oder bildende Verbindungen können vorzugsweise feste, gelöste und/oder suspendierte Alkali- und/oder Erdalkalihydroxide und/oder -oxide in dem Abwasser enthalten sein und/oder diesem zugesetzt werden. Insbesondere wird eine calciumhydroxidhaltige wäßrige Lösung oder Suspension, vorzugsweise Kalkmilch, eingesetzt. Die vorgenannten alkalisch wirkenden Substanzen werden vorzugsweise auch zur Einstellung oder Einhaltung der erfindungsgemäßen pH-Werte (jeweils gemessen bei Raumtemperatur) verwendet.

Des weiteren wurde gefunden, daß eine pH-Kontrolle der erfindungsgemäß durchgeführten Oxidation von organischen Verbindungen mittels Chlor notwendig ist. Die Einleitung von Chlor in eine alkalische wäßrige Lösung führt zu einer Absenkung des pH-Wertes, wobei die pH-Verminderung von der eingeleiteten Chlor-Menge abhängig ist. Bei tieferen pH-Werten, insbesondere im stärker sauren pH-Bereich, kommt es zu einer unerwünschten AOX-Erhöhung des Abwassers. Erfindungsgemäß wurde festgestellt, daß die vorgenannten Nachteile vermieden werden können, wenn ein pH-Wert des Abwassers von ≥ 5, vorzugsweise ≥ 6 eingehalten wird. Insbesondere hat es sich als günstig erwiesen, einen pH-Wert von ≥ 10 während des Chloreintrags in das Abwasser einzuhalten oder einzustellen. Am Ende der erfindungsgemäß einzuhaltenden Reaktionszeit stellt sich dann in dem behandelten Abwasser ein pH-Wert von etwa 9 ein.

Es wurde weiterhin erfindungsgemäß festgestellt, daß eine Erhöhung der Oxidationsgeschwindigkeit mit zunehmender Temperatur erreicht wird, was zu einer Verkürzung der Verweilzeiten bzw. Reaktionszeiten nach der Chloreinleitung führt und die Geschwindigkeit des CSB-Abbaus erhöht. Insbesondere wurde gefunden, das Abwasser bei einer Temperatur von 40 bis 140 °C, vorzugsweise 40 bis 100 °C, insbesondere 80 bis 95 °C, mit einer Chlor enthaltenden und/oder Chlor freisetzenden chemischen Substanz zu behandeln.

Der Chloreintrag wird vorzugsweise unter Einstellung oder Einhaltung von Normaldruck in dem Behandlungsreaktor vorgenommen. Dies hat apparative und wirtschaftliche Vorteile. Es kann jedoch auch eine Reaktionsführung unter Überdruck erfolgen, wobei eine vorteilhafte signifikante Abnahme des AOX gefunden wurde.

Wird das erfindungsgemäße Verfahren drucklos durchgeführt, so kann das zwischenzeitlich gebildete $CO_2$ einfach aus dem Behandlungsreaktor abgeführt oder abgeleitet werden. Dies gilt ebenso für gasförmig gebildete Zwischenprodukte der oxidativen Behandlung der organischen Abwasserinhaltsstoffe. Bei der Verfahrensvariante unter Überdruck wurde für die Behandlung von Abwässern aus einer Allylcholrid/Epichlorhydrin/Glycerin-Anlage festgestellt, daß die bei der Chlorbehandlung gebildeten gasförmigen Zwischenprodukte des oxidativen Abbaus der organischen Abwasserinhaltsstoffe in dem Reaktor gehalten und durch das Hypochlorit bei Einhaltung der erfindungsgemäßen Reaktionszeit zu $CO_2$ weiteroxidiert werden.

Weiterhin wurde erfindungsgemäß festgestellt, daß besonders gute Ergebnisse durch einen Chloreintrag (bezogen auf den Chlorgehalt der Chlor enthaltenden und/oder Chlor freisetzenden chemischen Substanz) in einer Menge von 2 bis 10 g Chlor/g CSB, vorzugsweise 2 bis 8 g Chlor/g CSB, besonders bevorzugt 5 bis 8 g Chlor/g CSB, insbesondere 4 bis 6 g Chlor/g CSB, erhalten werden.

Um die Bildung von unerwünschten Nebenprodukten bei der erfindungsgemäßen Oxidation weitgehend zu vermeiden, muß auf möglichst einfache und wirksame Weise die vorbeschriebene, genau definierte Menge an Aktivchlor in dem Abwasser erzeugt oder bereitgestellt werden. Dies kann durch Zugabe von "freiem wirksamem Chlor" in Form von gelöstem elementarem Chlor, unterchloriger Säure und/oder Hypochlorit erfolgen. Das Oxidationsmittel kann aber auch als "gebundenes wirksames Chlor" in Form von oxidierend wirkenden Chlor-Substitutionsverbindungen oder anderen Chlor freisetzenden Substanzen, wie beispielsweise Chloramin-T, verfügbar gemacht werden. Weiterhin können chloridhaltige Wässer, aus denen Chlor elektrochemisch freigesetzt wird, verwendet werden. Bevorzugt wird als Chlor enthaltende chemische Substanz ein chlorhaltiges Gas, insbesondere Chlorgas, in dem erfindungsgemäßen Verfahren eingesetzt.

Um die kinetischen Bedingungen der Chlorierung des Abwassers zu verbessern und die Bildung von erheblichen lokalen Chlorkonzentrationsschwankungen und damit verbundenen lokalen starken pH-Absenkungen zu vermeiden, sollte die Chloreinleitung möglichst feinteilig erfolgen und als chlorhaltiges Gas verdünntes Chlorgas, vorzugsweise mit einem Inertgas wie Stickstoff vermischtes gasförmiges Chlor, eingesetzt werden.

Die Einleitung des chlorhaltigen Gases wird vorteilhafterweise unter Verwendung eines Überdrucks von 0,1 bis 7 bar, vorzugsweise 0,1 bis 5 bar, besonders bevorzugt 0,2 bis 6 bar, insbesondere 0,2 bis 3 bar, durchgeführt.

Das erfindungsgemäße Verfahren kann weiterhin dadurch verbessert werden, daß während und/oder nach der Behandlung des Abwassers mit der Chlor enthaltenden und/oder Chlor freisetzenden chemischen Substanz ein pH-Wert (gemessen bei Raumtemperatur) des Abwassers von 10 bis 14, vorzugsweise 11 bis 13, eingehalten oder eingestellt wird und daß das chlorbehandelte Abwasser bei einer Temperatur von 65 bis 200 °C, vorzugsweise 80 bis 135 °C, einer Reaktionszeit von 0,25 bis 8 Stunden, vorzugsweise 0,5 bis 8 Stunden, besonders bevorzugt 1 bis 5 Stunden, insbesondere 3 bis 5 Stunden, unterzogen wird.

Hierdurch läßt sich noch einmal eine Steigerung des CSB- und insbesondere auch des AOX-Abbaus erreichen.

Durch Einstellung oder Einhaltung bestimmter Druckverhältnisse in dem Reaktor wird nochmals eine Verbesserung der Abbauraten gefunden. Bevorzugt wird während der Reaktionszeit ein Druck in dem Reaktor von 1 bis 11 bar (abs.), vorzugsweise 1,1 bis 7 bar, insbesondere 1,1 bis 4 bar (abs.), eingehalten oder eingestellt.

Die Behandlung bei Überdruck hat sich als besonders vorteilhaft erwiesen. Werden beispielsweise ein pH-Wert von $\geq$ 10, eine Temperatur von ca. 130 °C und ein Druck von ca. 2,5 bar (abs.) während einer Reaktionszeit von 60 bis 90 Minuten eingehalten, so konnten ein CSB-Abbau von mehr als 92 % und eine AOX-Verminderung von mehr als 80 % festgestellt werden.

Das erfindungsgemäße Verfahren kann kontinuierlich oder diskontinuierlich durchgeführt werden. Als Behandlungsgefäße oder Reaktoren können Reaktionskolonnen oder Rohrreaktoren eingesetzt werden. Die Zugabe der Chlor enthaltenden und/oder Chlor freisetzenden Substanz zu dem Abwasser kann beispielsweise in einem Strömungsrohr erfolgen, wobei die Länge des Strömungsrohres und/oder die Strömungsgeschwindigkeit des Abwassers so zu bemessen sind, daß die erfindungsgemäße Reaktions- bzw. Verweilzeit des Abwassers in der Behandlungsvorrichtung eingehalten wird. Zur Durchführung des erfindungsgemäßen Verfahrens ist auch der Einsatz mehrerer hintereinander oder parallel geschalteter Reaktoren möglich.

Weiterhin kann der Reaktor bzw. können die Reaktoren Einbauten zur Durchmischung des zu behandelnden Abwassers aufweisen.

Zur Vermeidung von Verstopfungen in der Behandlungsvorrichtung durch absitzende Feststoffe, die gegebenenfalls in dem Abwasser vorhanden sind oder während der oxidativen Behandlung gebildet werden, kann es vorteilhaft sein, vor, während und/oder nach der Behandlung das Abwasser von suspendierten Feststoffen, vorzugsweise durch chemische Reaktion und/oder mechanische Trennverfahren, wie beispielsweise Filtration und/oder Sedimentation, zumindest teilweise zu befreien.

Zur weiteren Senkung des CSB- und gegebenenfalls eines vorhandenen AOX-Gehaltes des Abwassers kann nachfolgend eine Weiterbehandlung des oxidativ und thermisch-alkalisch behandelten Abwassers vorgenommen werden.

Dabei hat sich eine Kombination des erfindungsgemäßen oxidativen, thermisch-alkalischen Behandlungsverfahrens mit einer anschließenden Ozonbehandlung als vorteilhaft erwiesen. Die hohe Oxidationskraft des Ozons wird seit längerem in der Behandlung von Abwässern eingesetzt, um organische Abwasserinhaltsstoffe oxidativ abzubauen, wobei bestimmte Einwirkzeiten und Ozonkonzentrationen einzuhalten sind.

Die erfindungsgemäß vorgesehene Ozonbehandlung wird vorzugsweise wie folgt durchgeführt: Das oxidativ und thermischalkalisch behandelte Abwasser wird mit einem ozonhaltigen Gas ersetzt, wobei in dem Abwasser ein pH-Wert $\geq$ 10 (gemessen bei Raumtemperatur), vorzugsweise $\geq$ 11, eingehalten oder eingestellt und der Ozoneintrag in einer Menge von 1 bis 4 g Ozon/g CSB, vorzugsweise 2 bis 2,5 g Ozon/g CSB, vorgenommen wird.

Die gegebenenfalls notwendige Einstellung des pH-Wertes kann mittels üblichen alkalisch wirkenden Mitteln erfolgen. Insbesondere können die bereits für das erfindungsgemäße oxidative und thermisch-alkalische Behandlungsverfahren bestimmten alkalisch wirkenden Substanzen eingesetzt werden.

Die Ozonisierung des Abwassers wird insbesondere bei Raumtemperatur durchgeführt, wobei gegebenenfalls eine Abkühlung eines bei der vorhergehenden Behandlung erhitzten Abwassers erfolgen muß. Die Ozonbehandlung kann aber auch bei erhöhter Temperatur vorgenommen werden.

Die Ozonisierung kann bei entsprechender Ausstattung in dem bereits eingesetzten Behandlungsreaktor durchgeführt werden. Vorzugsweise wird jedoch das bereits behandelte Abwasser in einen weiteren Reaktor und/oder eine besondere Vorrichtung zur Ozonbehandlung eingeführt oder eingeleitet. Hierfür werden handelsübliche Ozonisierungsvorrichtungen eingesetzt, die mindestens einen Ozongenerator, einen Behandlungsreaktor aus einem inerten Material mit Einbauten zur Durchmischung des Abwassers und einen Injektor enthalten, um das Ozon in das Abwasser einzutragen. Das während der Ozonisierung gebildete $CO_2$ wird, gegebenenfalls unter Einsatz besonderer Einrichtungen, aus dem Behandlungsreaktor abgezogen oder abgetrieben.

Die Ozonbehandlung kann ein- oder mehrstufig durchgeführt werden. Zur Erhöhung der Abbauleistung kann außerdem während der Ozonisierung noch mit UV-Licht bestrahlt werden.

Der Einsatz von Ozon in Kombination mit dem erfindungsgemäßen oxidativen und thermisch-alkalischen Verfahren führt zu einer weiteren vorteilhaften Reduzierung CSB- und gegebenenfalls AOX-erzeugender Komponenten in dem zu behandelnden Abwasser.

An Stelle der Ozonbehandlung kann die Weiterbehandlung des Abwassers auch durch eine oxidative und/oder adsorptive Behandlung erfolgen, wobei die Weiterbehandlung hierbei vorzugsweise unter Verwendung von Wasserstoffperoxid und/oder Aktivkohle durchgeführt wird.

Bevorzugt wird im Anschluß an die Aktivkohlebehandlung eine Regenerierung der Aktivkohle, vorzugsweise durch eine thermische Behandlung unter Verwendung wäßriger Alkalien, durchgeführt.

Die Weiterbehandlung des Abwassers kann auch durch eine katalytische Behandlung erfolgen, wobei als Katalysator vorzugsweise ein Edelmetallkatalysator verwendet wird und die Behandlung in Gegenwart von Wasserstoff durchgeführt wird.

Weiterhin kann das erfindungsgemäße Verfahren mit einer Vorbehandlung des Abwassers kombiniert werden, um beispielsweise andere als organische Schadstoffe aus dem Abwasser zu entfernen oder um in einer Vorreinigungsstufe bereits einen CSB-, AOX-, TOC- und/oder BSB-Abbau vorzunehmen, damit die anschließende Behandlung nach dem erfindungsgemäßen Verfahren unter milderen Bedingungen und/oder mit geringerem Einsatz an Chemikalien durchgeführt werden kann.

Die Vorbehandlung erfolgt bevorzugt durch ein thermisches alkalisches, ein adsorptives und/oder ein mikrobiologisches Verfahren. Die thermische alkalische Vorbehandlung wird unter Einhaltung und/oder Einstellung bestimmter, definierter pH-Werte, Temperaturen, Drücke und Verweilzeiten durchgeführt. Als adsorptives Verfahren wird beispielsweise eine Aktivkohlebehandlung vorgeschlagen. Die mikrobiologische Vorreinigung kann unter Einsatz von anaeroben oder aeroben Bakterien vorgenommen werden.

Das erfindungsgemäße Abwasserbehandlungsverfahren kann zum Abbau CSB- und (soweit vorhanden) AOX-erzeugender Komponenten in Abwasser eingesetzt werden. Ein spezielles technisches Gebiet, auf dem das gefundene Verfahren eingesetzt werden kann, ist die Behandlung von Abwässern aus der Halogenhydrin-, Polyol- und/oder Vinylchloridherstellung. Insbesondere für derartige Abwässer sollte ein technisch wenig aufwendiges und preiswertes Reinigungsverfahren bereitgestellt werden.

Mit dem erfindungsgemäßen Verfahren können Abwässer aus der Glycerin- und/oder Polyglycerinherstellung, des weiteren aus der Chlorhydrinherstellung, vorzugsweise aus der Epichlorhydrinsynthese, gereinigt werden, wobei das Epichlorhydrin erhalten wird durch Umsetzung einer dichlorpropanolhaltigen Lösung mit mindestens einer alkalischen Verbindung, vorzugsweise einer calciumhydroxidhaltigen wäßrigen Suspension mit einem Überschuß an Calciumhydroxid bezogen auf das eingesetzte Dichlorpropanol.

Ebenso eignet sich das erfindungsgemäße Verfahren sehr gut zur Behandlung von Mischabwässern aus der Halogenhydrin-, Polyol- und/oder Vinylchloridherstellung, das heißt zur Behandlung von Abwässern, die durch Mischen der vorgenannten Abwässer aus der Halogenhydrin-, Polyol- und/oder Vinylchloridherstellung anfallen.

Weiterhin wurde festgestellt, daß CSB-erzeugende Komponenten in Abwässern, wie insbesondere gesättigte und/oder ungesättigte aliphatische und/oder alicyclische Kohlenwasserstoffe, Ether, Alkohole, vorzugsweise auch Polyole, Ketone, Aldehyde und/oder Carbonsäuren, durch das erfindungsgemäße Verfahren sehr gut abgebaut werden.

Dies trifft auch für zusätzlich AOX-Werte erzeugende Komponenten, wie insbesondere gesättigte und/oder ungesättigte aliphatische und/oder alicyclische Chlor-Kohlenwasserstoffe, -Ether, -Alkohole, -Ketone, -Aldehyde, -hydrine und/oder -Carbonsäuren, zu.

Des weiteren wird das erfindungsgemäße Verfahren zur Behandlung von Abwässern eingesetzt, die bei der Anwendung und/oder Umsetzung von Halogenhydrinen, beispielsweise bei der Herstellung von Epoxidharzen aus Halogenhydrinen, und/oder Polyolen anfallen.

Die nachfolgenden Ausführungsbeispiele sollen das erfindungsgemäße Verfahren erläutern, ohne es hierauf zu beschränken.

**Ausführungsbeispiele**

<u>Beispiel 1:</u>

1000 ml Abwasser aus einer Anlage zur Herstellung von Allylchlorid/Epichlorhydrin/Glyerin werden in ein Reaktionsgefäß überführt, und bei 95 °C werden innerhalb von 25 min. 7 g Chlor in das Abwasser eingeleitet. Der pH-Wert fällt dabei auf 6,8. Die Lösung wird nach Beendigung der Chloreinleitung noch 90 min. bei 95 °C gerührt und anschließend aus dem Reaktor abgelassen.

Es wurden die nachfolgenden Bewertungsparameter für das einlaufende (unbehandelte) und das ablaufende (behandelte) Abwasser bestimmt.

| Analysedaten des einlaufenden Abwassers: | Analysedaten des ablaufenden Abwassers: |
|---|---|
| pH = 12,1 | pH = 6,5 |
| CSB = 890 mg/l | CSB = 27 mg/l |
| AOX = 26,3 mg/l | AOX = 5 mg/l |
| DOC = 303 mg/l | DOC = 16,4 mg/l |
| OH~ = 0,185 mol/l | |
| Cl~ = 20,4 g/l | Cl~ = 25,0 g/l |

<u>Beispiel 2:</u>

1000 ml Abwasser aus einer Anlage zur Herstellung von Allylchlorid/Epichlorhydrin/Glycerin werden mit 100 ml eines vinylchloridhaltigen Abwassers gemischt und in ein Reaktionsgefäß überführt. Die Lösung wird auf 85 °C erwärmt, und innerhalb von 20 min. werden 7 g Chlor eingeleitet. Dabei fällt der pH-Wert auf 6,3 bis 6,4 ab. Die Lösung wird nach Beendigung der Chlorzugabe noch 90 min. bei 85 °C ausgeführt und anschließend aus dem Reaktor abgelassen.

Es wurden die nachfolgenden Bewertungsparameter für das einlaufende (unbehandelte) und das ablaufende (behandelte) Abwasser bestimmt.

| Analysedaten des einlaufenden Abwassers: | Analysedaten des ablaufenden Abwassers: |
|---|---|
| pH = 11,8 | pH = 6,3 |
| CSB = 935 mg/l | CSB = 48 mg/l |
| AOX = 23,8 mg/l | AOX = 14,8 mg/l |
| DOC = 358 mg/l | DOC = 23,8 mg/l |
| OH~ = 0,169 mol/l | |
| Cl~ = 22,4 g/l | Cl~ = 25,9 g/l |

<u>Beispiel 3:</u>

Wie in Ausführungsbeispiel 2 wurde eine Mischung aus 1000 ml Abwasser aus einer Anlage zur Herstellung von Allylchlorid/Epichlorhydrin/Glycerin und 100 ml vinylchloridhaltigem Abwasser, z. B. Abwasser aus der Vinylchloridproduktion, hergestellt und in ein Reaktionsgefäß eingeleitet. In das Mischabwasser wurden bei 95 °C innerhalb von 25 min. 4,6 g Chlor eingeleitet. Der pH-Wert fällt dabei auf 10,3. Dann wurde das Mischabwasser in einen Autoklaven überführt und 1 h bei 130 °C und 2,6 bar (abs.) gerührt. Anschließend wurde das Abwasser aus dem Reaktor abgelassen.

Es wurden die nachfolgenden Bewertungsparameter für das einlaufende (unbehandelte) und das ablaufende (behandelte) Abwasser bestimmt.

| Analysedaten des einlaufenden Abwassers: | Analysedaten des ablaufenden Abwassers: |
|---|---|
| pH = 11,8 | pH = 10,2 |
| CSB = 935 mg/l | CSB = 78 mg/l |
| AOX = 23,8 mg/l | AOX = 2,2 mg/l |
| DOC = 358 mg/l | DOC = 39,5 mg/l |
| OH~ = 0,169 mol/l | |
| Cl~ = 22,4 g/l | Cl~ = 25,6 g/l |

<u>Beispiel 4:</u>

1000 ml Abwasser aus einer Anlage zur Herstellung von Allylchlorid/Epichlorhydrin/Glycerin werden in ein Reaktionsgefäß überführt, und innerhalb von 37 min. werden 5,1 g Chlor bei 97 °C in das Abwasser eingeleitet. Die Lösung wird nach Beendigung der Chlorzugabe in einen Autoklaven überführt und für 1 h bei 130 °C und 2,5 bar (abs.) gehalten. Anschließend wurde das Abwasser aus dem Reaktor abgelassen.

Es wurden die nachfolgenden Bewertungsparameter für das einlaufende (unbehandelte) und das ablaufende (behandelte) Abwasser bestimmt.

| Analysedaten des einlaufenden Abwassers: | Analysedaten des ablaufenden Abwassers: |
|---|---|
| pH = 12,1 | pH = 6,2 |
| CSB = 890 mg/l | CSB = 19 mg/l |
| AOX = 26,3 mg/l | AOX = 7,8 mg/l |
| DOC = 303 mg/l | DOC = 9,5 mg/l |
| OH~ = 0,185 mol/l | |
| Cl~ = 20,4 g/l | Cl~ = 23,9 g/l |

## Beispiel 5:

1000 ml Abwasser aus einer Anlage zur Herstellung von Allylchlorid/Epichlorhydrin/Glycerin mit einem pH-Wert von 12 (gemessen bei Raumtemperatur) werden bei einer Temperatur von 130 °C und einer Verweilzeit von 4 Stunden der erfindungsgemäßen thermischalkalischen Behandlung unterworfen. Anschließend wird dieses Wasser mit 7 g Chlor/g CSB bei 130 °C und einer Verweilzeit von 3 Stunden behandelt.

Es wurden folgende Bewertungsparameter für das unbehandelte und das behandelte Abwasser bestimmt:

| Analysedaten des einlaufenden Abwassers: | Analysedaten des ablaufenden Abwassers: |
|---|---|
| CSB = 1116 mg O$_2$/l | CSB = 58 mg O$_2$/l |
| AOX = 36 mg Cl/l | AOX = 2 mg Cl/l |
| DOC = 400 mg C/l | DOC = 32 mg C/l |

## Beispiel 6:

1000 ml Abwasser aus einer Anlage zur Herstellung von Allylchlorid/Epichlorhydrin/Glycerin mit einem pH-Wert von 12 (gemessen bei Raumtemperatur) werden mit 7 g Chlor/g CSB bei 130 °C und einer Verweilzeit von 3 Stunden behandelt.

Es wurden folgende Bewertungsparameter für das unbehandelte und das behandelte Abwasser bestimmt:

| Analysedaten des einlaufenden Abwassers: | Analysedaten des ablaufenden Abwassers: |
|---|---|
| CSB = 1116 mg O$_2$/l | CSB = 67 mg O$_2$/l |
| AOX = 36 mg Cl/l | AOX = 3 mg Cl/l |
| DOC = 400 mg C/l | DOC = 61 mg C/l |

## Beispiel 7:

Abwässer aus einer Anlage zur Herstellung von Allylchlorid/Epichlorhydrin/Glycerin wurden in einer technischen Anlage im kontinuierlichen Betrieb unter den folgenden erfindungsgemäßen Bedingungen behandelt:

Temperatur des zulaufenden Abwassers:
93-97 °C
Zulaufvolumenstrom:
0,6 m$^3$/h
Alkalität im zulaufenden Abwasser:
350 - 500 mval OH~/l
pH-Wert (gemessen bei 25 °C):
> 11
Chlormassenstrom:
4,3 - 4,5 kg/h
Druck im Reaktionssystem:
2,55 bar
Temperatur im Reaktionssystem:
125 °C
Verweilzeit im Reaktionssystem:
2 h
pH-Wert (gemessen bei 25 °C) im Ablauf:
11

Es wurden folgende Bewertungsparameter für das zulaufende (unbehandelte) und das ablaufende (behandelte) Abwasser bestimmt:

| Analysedaten des einlaufenden Abwassers: | Analysedaten des ablaufenden Abwassers: |
|---|---|
| CSB = 833 mg O$_2$/l | CSB = 36 mg O$_2$/l |
| AOX = 13 mg Cl/l | AOX = 2 mg Cl/l |
| DOC = 286 mg C/l | DOC = 8 mg C/l |

## Beispiel 8:

Verfahren analog Beispiel 7

Es wurden folgende Bewertungsparameter für das zulaufende (unbehandelte) und das ablaufende (behandelte) Abwasser bestimmt:

| Analysedaten des einlaufenden Abwassers: | Analysedaten des ablaufenden Abwassers: |
| --- | --- |
| CSB = 1023 mg $O_2$/l | CSB = 75 mg $O_2$/l |
| AOX = 14 mg Cl/l | AOX = 3 mg Cl/l |
| DOC = 433 mg C/l | DOC = 15 mg C/l |

**Patentansprüche**

1. Verfahren zur Verminderung des Gehaltes an organischchemischen Stoffen in Abwässern aus der Halogenhydrin-, Polyol- und/oder Vinylchloridherstellung, dadurch gekennzeichnet,

   - daß das Abwasser, das einen CSB-Gehalt (chemischer Sauerstoffbedarf) und eine Alkalität aufweist oder alkalisch eingestellt wird, in mindestens einen Reaktor eingeleitet und bei einer Temperatur von mehr als 80 °C mit einer Chlor enthaltenden und/oder Chlor freisetzenden chemischen Substanz behandelt wird, wobei der Chloreintrag in einer Menge von mehr als 1 g Chlor/g CSB (bezogen auf den Chlorgehalt der Chlor enthaltenden und/oder Chlor freisetzenden chemischen Substanz) erfolgt und ein Molverhältnis von OH~ zu Chlor von mehr als 1,5 und während der Reaktion ein pH-Wert des Abwassers von $\geq$ 5 vorzugsweise $\geq$ 6 eingehalten oder eingestellt werden,

   - daß das chlorbehandelte Abwasser einer Reaktionszeit von mehr als 0,25 Stunden vorzugsweise mehr als 0,4 Stunden unterzogen wird, wobei die organischen Verbindungen zumindest teilweise oxidiert werden,

   - und daß nachfolgend das Abwasser weiterbehandelt und/oder aus dem Reaktor ausgetragen oder abgelassen wird.

2. Verfahren nach Anspruch 1, dadurch gekennzeichnet, daß das Abwasser bei einer Temperatur von 95 °C, mit einer Chlor enthaltenden und/oder Chlor freisetzenden chemischen Substanz behandelt wird.

3. Verfahren nach den Ansprüchen 1 und 2, dadurch gekennzeichnet, daß der Chloreintrag in einer Menge von 2 bis 10 g Chlor/g CSB, vorzugsweise 2 bis 8 g Chlor/g CSB, besonders bevorzugt 5 bis 8 g Chlor/g CSB, insbesondere 4 bis 6 g Chlor/g CSB, (jeweils bezogen auf den Chlorgehalt der Chlor enthaltenden und/oder Chlor freisetzenden chemischen Substanz) erfolgt.

4. Verfahren nach einem oder mehreren der Ansprüche 1 bis 3, dadurch gekennzeichnet, daß der Chloreintrag unter Einstellung oder Einhaltung von Normaldruck in dem Reaktor erfolgt.

5. Verfahren nach einem oder mehreren der Ansprüche 1 bis 3, dadurch gekennzeichnet, daß der Chloreintrag unter Einstellung oder Einhaltung eines Überdrucks in dem Reaktor erfolgt.

6. Verfahren nach einem oder mehreren der Ansprüche 1 bis 5, dadurch gekennzeichnet, daß ein Molverhältnis von OH~ zu Chlor von 1,6 bis 3,5, vorzugsweise 1,6 bis 2,5, besonders bevorzugt 2 bis 3, insbesondere 2 bis 2,2, eingehalten oder eingestellt wird.

7. Verfahren nach einem oder mehreren der Ansprüche 1 bis 6, dadurch gekennzeichnet, daß als Chlor enthaltende chemische Substanz ein chlorhaltiges Gas, vorzugsweise Chlorgas, eingesetzt wird.

8. Verfahren nach Anspruch 7, dadurch gekennzeichnet, daß die Einleitung des chlorhaltigen Gases unter Verwendung eines Überdruckes von 0,1 bis 7 bar, vorzugsweise 0,1 bis 5 bar, besonders bevorzugt 0,2 bis 6 bar, insbesondere 0,2 bis 3 bar, erfolgt.

9. Verfahren nach einem oder mehreren der Ansprüche 1 bis 8, dadurch gekennzeichnet, daß während und/oder nach der Behandlung des Abwassers mit der Chlor enthaltenden und/oder Chlor freisetzenden chemischen Substanz ein pH-Wert (gemessen bei Raumtemperatur) des Abwassers von 10 bis 14, vorzugsweise 11 bis 13, eingehalten oder eingestellt wird und daß das chlorbehandelte Abwasser bei einer Temperatur von 65 bis 200 °C, vorzugsweise 80 bis 135 °C, einer Reaktionszeit von 0,25 bis 8 Stunden, vorzugsweise 0,5 bis 8 Stunden, besonders bevorzugt 1 bis 5 Stunden, insbesondere 3 bis 5 Stunden, unterzogen wird.

10. Verfahren nach Anspruch 9, dadurch gekennzeichnet, daß während der Reaktionszeit ein Druck in dem Reaktor von 1 bis 11 bar (abs.), vorzugsweise 1,1 bis 7 bar, insbesondere 1,1 bis 4 bar (abs.), eingehalten oder eingestellt wird.

11. Verfahren nach einem oder mehreren der Ansprüche 1 bis 10, dadurch gekennzeichnet, daß die Einstellung oder Einhaltung der Alkalität und/oder des pH-Wertes durch Zugabe einer alkalische wirkenden Substanz, vorzugsweise festem, gelöstem und/oder suspendiertem Alkali- und/oder Erdalkalihydroxid und/oder -oxid, erfolgt.

12. Verfahren nach Anspruch 11, dadurch gekennzeichnet, daß die Einstellung oder Einhaltung der Alkalität und/oder des pH-Wertes durch Zugabe einer calciumhydroxidhaltigen wäßrigen Lösung oder Suspension, vorzugsweise Kalkmilch, erfolgt.

13. Verfahren nach einem oder mehreren der Ansprüche 1 bis 12, dadurch gekennzeichnet, daß das Abwasser vor, während und/oder nach der Behandlung von suspendierten Feststoffen, vorzugsweise durch chemische Reaktion und/oder mechanische Trennverfahren, zumindest teilweise befreit wird.

14. Verfahren nach einem oder mehreren der Ansprüche 1 bis 13, dadurch gekennzeichnet, daß das behandelte Abwasser einer Weiterbehandlung unter Verwendung eines ozonhaltigen Gases unterworfen wird, wobei in dem behandelten Abwasser ein pH-Wert $\geq$ 10 (gemessen bei Raumtemperatur), vorzugsweise $\geq$ 11, eingehalten oder eingestellt wird und der Ozoneintrag in einer Menge von 1 bis 4 g Ozon/g CSB, vorzugsweise 2 bis 2,5 g Ozon/g CSB, erfolgt.

15. Verfahren nach einem oder mehreren der Ansprüche 1 bis 14, dadurch gekennzeichnet, daß das behandelte Abwasser zur Weiterbehandlung unter Verwendung eines ozonhaltigen Gases in mindestens einen weiteren Reaktor und/oder eine Vorrichtung zur Ozonbehandlung eingeleitet wird.

16. Verfahren nach einem oder mehreren der Ansprüche 1 bis 13, dadurch gekennzeichnet, daß die Weiterbehandlung des Abwassers durch eine oxidative und/oder adsorptive Behandlung erfolgt.

17. Verfahren nach Anspruch 16, dadurch gekennzeichnet, daß die Weiterbehandlung unter Verwendung von Wasserstoffperoxid und/oder Aktivkohle durchgeführt wird.

18. Verfahren nach den Ansprüchen 16 und 17, dadurch gekennzeichnet, daß im Anschluß an die Aktivkohlebehandlung eine Regenerierung der Aktivkohle, vorzugsweise durch eine thermische Behandlung unter Verwendung wäßriger Alkalien, durchgeführt wird.

19. Verfahren nach einem oder mehreren der Ansprüche 1 bis 18, dadurch gekennzeichnet, daß ein vorbehandeltes Abwasser der Chlorbehandlung unterworfen wird, wobei die Vorbehandlung durch ein thermisches alkalisches, ein adsorptives und/oder ein mikrobiologisches Verfahren erfolgt.

20. Verwendung des Verfahrens nach den Ansprüchen 1 bis 19 zur Behandlung von Abwässern aus der Epichlorhydrin-, Glycerin- und/oder Polyglycerinherstellung.

21. Verwendung des Verfahrens nach einem oder mehreren der Ansprüche 1 bis 19 zur Behandlung von Mischabwässern, erhalten aus der Halogenhydrin-, Polyol- und/oder Vinylchloridherstellung.

22. Verwendung des Verfahrens nach den Ansprüchen 1 bis 19 zur Behandlung von Abwässern, die gesättigte und/oder ungesättigte aliphatische und/oder alicyclische Kohlenwasserstoffe, Ether, Alkohole, vorzugsweise auch Polyole, Ketone, Aldehyde und/oder Carbonsäuren enthalten.

23. Verwendung nach Anspruch 22 zur Behandlung von Abwässern, die zusätzlich gesättigte und/oder ungesättigte aliphatische und/oder alicyclische Chlor-Kohlenwasserstoffe, -Ether, - Alkohole, -Ketone, -Aldehyde, -hydrine und/oder -Carbonsäuren enthalten.

24. Verwendung des Verfahrens nach einem oder mehreren der Ansprüche 1 bis 19 zur Behandlung von Abwässern, die bei der Anwendung und/oder Umsetzung von Halogenhydrinen und/oder Polyolen anfallen.

25. Verfahren nach einem oder mehreren der Ansprüche 1 bis 13, dadurch gekennzeichnet, daß die Weiterbehandlung des Abwassers durch eine katalytische Behandlung erfolgt.

**Claims**

1. A process for reducing the content of organic-chemical substances in waste water from the production of halohydrins, polyols and/or vinyl chloride, characterised in that

- the waste water, which has a COD content (chemical oxygen demand) and is alkaline or is rendered alkaline, is introduced into at least one reactor and is treated at a temperature of more than 80°C with a chlorine-containing and/or chlorine-releasing chemical substance, the introduction of chlorine taking place in a quantity of more than 1 g chlorine/g COD (relative to the chlorine content of the chlorine-containing and/or chlorine-releasing chemical substance), and a molar ratio of OH$^-$ to chlorine of more than 1.5 and a pH value of the waste water of $\geq$ 5, preferably $\geq$ 6 being maintained or set during the reaction,
- that the chlorine-treated waste water is subjected to a reaction time of more than 0.25 hours, preferably more than 0.4 hours, with the organic compounds being at least partially oxidised,
- and that subsequently the waste water is treated further and/or is discharged or drained off from the reactor.

2. A process according to Claim 1, characterised in that the waste water is treated with a chlorine-containing and/or chlorine-releasing chemical substance at a temperature of 95°C.

3. A process according to Claims 1 and 2, characterised in that the introduction of chlorine takes place in an amount of 2 to 10 g chlorine/g COD, preferably 2 to 8 g chlorine/g COD, particularly preferably 5 to 8 g chlorine/g COD, in particular 4 to 6 g chlorine/g COD, (in each case relative to the chlorine content of the chlorine-containing and/or chlorine-releasing chemical substance).

4. A process according to one or more of Claims 1 to 3, characterised in that the introduction of chlorine takes place with normal pressure being set or maintained in the reactor.

5. A process according to one or more of Claims 1 to 3, characterised in that the introduction of chlorine takes place with an excess pressure being set or maintained in the reactor.

6. A process according to one or more of Claims 1 to 5, characterised in that a molar ratio of $OH^-$ to chlorine of 1.6 to 3.5, preferably 1.6 to 2.5, particularly preferably 2 to 3, in particular 2 to 2.2, is set or maintained.

7. A process according to one or more of Claims 1 to 6, characterised in that a chlorine-containing gas, preferably chlorine gas, is used as the chlorine-containing chemical substance.

8. A process according to Claim 7, characterised in that the introduction of the chlorine-containing gas takes place using an excess pressure of 0.1 to 7 bar, preferably 0.1 to 5 bar, particularly preferably 0.2 to 6 bar, in particular 0.2 to 3 bar.

9. A process according to one or more of Claims 1 to 8, characterised in that during and/or after the treatment of the waste water with the chlorine-containing and/or chlorine-releasing chemical substance a pH value (measured at room temperature) of the waste water of 10 to 14, preferably 11 to 13, is maintained or set, and that the chlorine-treated waste water is subjected to a reaction time of 0.25 to 8 hours, preferably 0.5 to 8 hours, particularly preferably 1 to 5 hours, in particular 3 to 5 hours, at a temperature of 65 to 200°C, preferably 80 to 135°C.

10. A process according to Claim 9, characterised in that during the reaction time a pressure in the reactor of 1 to 11 bar (absolute), preferably 1.1 to 7 bar, in particular 1.1 to 4 bar (absolute), is maintained or set.

11. A process according to one or more of Claims 1 to 10, characterised in that the setting or maintaining of the alkalinity and/or of the pH value takes place by the addition of an alkaline-acting substance, preferably solid, dissolved and/or suspended alkali and/or alkaline-earth hydroxide and/or oxide.

12. A process according to Claim 11, characterised in that the setting or maintaining of the alkalinity and/or of the pH value takes place by the addition of an aqueous solution or suspension containing calcium hydroxide, preferably milk of lime.

13. A process according to one or more of Claims 1 to 12, characterised in that the waste water is at least partially freed of suspended solids, preferably by chemical reaction and/or mechanical separation processes, before, during and/or after the treatment.

14. A process according to one or more of Claims 1 to 13, characterised in that the treated waste water is subjected to further treatment using an ozone-containing gas, with a pH value $\geq$ 10 (measured at room temperature), preferably $\geq$ 11, being maintained or set in the treated waste water and the introduction of ozone taking place in an amount of 1 to 4 g ozone/g COD, preferably 2 to 2.5 g ozone/g COD.

15. A process according to one or more of Claims 1 to 14, characterised in that the treated waste water is introduced into at least one further reactor and/or an apparatus for ozone treatment for further treatment using an ozone-containing gas.

16. A process according to one or more of Claims 1 to 13, characterised in that the further treatment of the waste water takes place by oxidative and/or adsorptive treatment.

17. A process according to Claim 16, characterised in that the further treatment is carried out using hydrogen peroxide and/or activated carbon.

18. A process according to Claims 16 and 17, characterised in that regeneration of the activated carbon, preferably by thermal treatment using aqueous alkalis, is carried out following the activated carbon treatment.

19. A process according to one or more of Claims 1 to 18, characterised in that a pre-treated waste water is subjected to the chlorine treatment, the pre-treatment taking place by a thermal alkaline, an adsorptive and/or a microbiological process.

20. The use of the process according to Claims 1 to 19 for the treatment of waste waters from the production of epichlorohydrin, glycerol and/or polyglycerol.

21. The use of the process according to one or more of Claims 1 to 19 for the treatment of mixed waste waters, obtained from the production of halohydrins, polyols and/or vinyl chloride.

22. The use of the process according to Claims 1 to 19 for the treatment of waste water which contains saturated and/or unsaturated aliphatic and/or alicyclic hydrocarbons, ethers, alcohols, preferably also polyols, ketones, aldehydes and/or carboxylic acids.

23. The use according to Claim 22 for the treatment of waste waters which additionally contain saturated and/or unsaturated aliphatic and/or alicyclic chlorohydrocarbons, chloroethers, chloroalcohols, chloroketones, chloroaldehydes, chlorohydrins and/or chlorocarboxylic acids.

24. The use of the process according to one or more of Claims 1 to 19 for the treatment of waste water which is produced upon the use and/or reaction of halohydrins and/or polyols.

25. A process according to one or more of Claims 1 to 13, characterised in that the further treatment of the waste water is effected by catalytic treatment.

**Revendications**

1. Procédé de réduction de la teneur en substances organochimiques dans des eaux usées provenant de la fabrication d'halohydrines, de polyols et/ou de chlorure de vinyle, caractérisé en ce que :

   - les eaux usées, qui présentent une teneur en DCO (demande chimique en oxygène) et une alcalinité ou sont réglées à pH alcalin, sont introduites dans au moins un réacteur et y sont traitées à une température de plus de 80°C par une substance chimique contenant du chlore et/ou libérant du chlore, l'apport de chlore se faisant en quantité de plus de 1 g de chlore par g de DCO (par rapport à la teneur en chlore de la substance chimique contenant du chlore et/ou libérant du chlore) et un rapport molaire de $OH^-$ au chlore de plus de 1,5 et, au cours de la réaction, une valeur du pH supérieure ou égale à 5, de préférence supérieure ou égale à 6, étant maintenus ou ajustés,
   - les eaux usées traitées au chlore sont soumises à une réaction d'une durée de plus de 0,25 heure, de préférence de plus de 0,4 heure, au cours de laquelle les composés organiques sont au moins partiellement oxydés, et
   - ensuite, les eaux usées sont retraitées et/ou déchargées ou évacuées du réacteur.

2. Procédé selon la revendication 1, caractérisé en ce que les eaux usées sont traitées par une substance chimique contenant du chlore et/ou libérant du chlore à une température de 95°C.

3. Procédé selon les revendications 1 et 2, caractérisé en ce que l'apport de chlore se fait en quantité de 2 à 10 g de chlore par g de DCO, de préférence de 2 à 8 g de chlore par g de DCO, mieux encore de 5 à 8 g de chlore par g de DCO, en particulier 4 à 6 g de chlore par g de DCO (respectivement par rapport à la teneur en chlore de la substance chimique contenant du chlore et/ou libérant du chlore).

4. Procédé selon une ou plusieurs des revendications 1 à 3, caractérisé en ce que l'apport de chlore se fait sous ajustement ou maintien d'une pression normale dans le réacteur.

5. Procédé selon une ou plusieurs des revendications 1 à 3, caractérisé en ce que l'apport de chlore se fait sous ajustement ou maintien d'une surpression dans le réacteur.

6. Procédé selon une ou plusieurs des revendications 1 à 5, caractérisé en ce qu'un rapport molaire de $OH^-$ au chlore de 1,6 à 3,5, de préférence de 1,6 à 2,5, mieux encore de 2 à 3, en particulier de 2 à 2,2, est maintenu ou ajusté.

7. Procédé selon une ou plusieurs des revendications 1 à 6, caractérisé en ce qu'on utilise comme substance chimique contenant du chlore un gaz chloré, de préférence du gaz chlore.

8. Procédé selon la revendication 7, caractérisé en ce que l'introduction du gaz chloré se fait en mettant en oeuvre une surpression de 0,1 à 7 bars, de préférence 0,1 à 5 bars, mieux encore 0,2 à 6 bars, en particulier 0,2 à 3 bars.

9. Procédé selon une ou plusieurs des revendications 1 à 8, caractérisé en ce que, pendant et/ou après le traitement des eaux usées par la substance chimique contenant du chlore et/ou libérant du chlore, une valeur du pH (mesurée à température ambiante) des eaux usées de 10 à 14, de préférence de 11 à 13, est maintenue ou ajustée et en ce que les eaux usées traitées au chlore sont soumises à une durée de la réaction de 0,25 à 8 heures, de préférence de 0,5 à 8 heures, mieux encore de 1 à 5 heures, en particulier de 3 à 5 heures, à une température de 65 à 200°C, de préférence 80 à 135°C.

10. Procédé selon la revendication 9, caractérisé en ce que, au cours de la durée de la réaction, une pression de 1 à 11 bars (absolus), de préférence de 1,1 à 7 bars, en particulier de 1,1 à 4 bars (absolus), est maintenue ou ajustée.

11. Procédé selon une ou plusieurs des revendications 1 à 10, caractérisé en ce que l'ajustement ou le maintien de l'alcalinité et/ou de la valeur du pH se fait par addition d'une substance à effet alcalin, de préférence un hydroxyde et/ou un oxyde de métal alcalin et/ou alcalino-terreux solide, dissous et/ou en suspension.

12. Procédé selon la revendication 11, caractérisé en ce que l'ajustement ou le maintien de l'alcalinité et/ou de la valeur du pH se fait par addition d'une solution ou d'une suspension aqueuse contenant de l'hydroxyde de calcium, de préférence du lait de chaux.

13. Procédé selon une ou plusieurs des revendications 1 à 12, caractérisé en ce que les eaux usées sont au moins partiellement débarrassées des solides en suspension, avant, pendant et/ou après le traitement, de préférence par réaction chimique et/ou par un procédé de séparation mécanique.

14. Procédé selon une ou plusieurs des revendications 1 à 13, caractérisé en ce que les eaux usées traitées sont soumises à un traitement ultérieur par utilisation d'un gaz contenant de l'ozone, une valeur du pH supérieure ou égale à 10 (mesurée à température ambiante), de préférence supérieure ou égale à 11, étant maintenue ou ajustée dans les eaux usées traitées et l'apport d'ozone se faisant en quantité de 1 à 4 g d'ozone par g de DCO, de préférence de 2 à 2,5 g d'ozone par g de DCO.

15. Procédé selon une ou plusieurs des revendications 1 à 14, caractérisé en ce que les eaux usées traitées sont acheminées, pour le traitement ultérieur par utilisation d'un gaz contenant de l'ozone, dans au moins un autre réacteur et/ou un dispositif de traitement à l'ozone.

16. Procédé selon une ou plusieurs des revendications 1 à 13, caractérisé en ce que le traitement ultérieur des eaux usées se fait par oxydation et/ou adsorption.

17. Procédé selon la revendication 16, caractérisé en ce que le traitement ultérieur est réalisé par utilisation de peroxyde d'hydrogène et/ou de charbon actif.

18. Procédé selon les revendications 16 et 17, caractérisé en ce que, à la suite du traitement au charbon actif, on effectue une régénération du charbon actif, de préférence par un traitement thermique en utilisant des produits alcalins aqueux.

19. Procédé selon une ou plusieurs des revendications 1 à 18, caractérisé en ce que des eaux usées prétraitées sont soumises au traitement au chlore, le prétraitement se faisant par un procédé alcalin thermique, un procédé d'adsorption et/ou un procédé microbiologique.

20. Utilisation du procédé selon les revendications 1 à 19 pour le traitement d'eaux usées provenant de la fabrication d'épichlorhydrines, de glycérines et/ou de polyglycérines.

21. Utilisation du procédé selon une ou plusieurs des revendications 1 à 19 pour le traitement d'eaux usées mixtes provenant de la fabrication d'halohydrines, de polyols et/ou de chlorure de vinyle.

22. Utilisation du procédé selon les revendications 1 à 19 pour le traitement d'eaux usées qui contiennent des hydrocarbures, des éthers, des alcools, de préférence également des polyols, des cétones, des aldéhydes et/ou des acides carboxyliques aliphatiques et/ou alicycliques saturés et/ou insaturés.

23. Utilisation du procédé selon la revendication 22 pour le traitement d'eaux usées qui contiennent en outre des hydrocarbures chlorés, des éthers chlorés, des alcools chlorés, des cétones chlorées, des aldéhydes chlorés, des chlorhydrines et/ou des acides carboxyliques chlorés aliphatiques et/ou alicycliques saturés ou insaturés.

24. Utilisation du procédé selon une ou plusieurs des revendications 1 à 19 pour le traitement d'eaux usées qui résultent de l'utilisation et/ou de la transformation d'halohydrines et/ou de polyols.

25. Procédé selon une ou plusieurs des revendications 1 à 13, caractérisé en ce que le traitement ultérieur des eaux usées se fait par traitement catalytique.